# FASCICULE DE BREVET EUROPEEN

(11) **EP 3 191 345 B1**
(45) Date de publication et mention de la délivrance du brevet: **28.10.2020**
(21) Numéro de dépôt: 15753111.2
(22) Date de dépôt: 16.07.2015
(51) Int. Cl.: B60Q 3/00, F21V 8/00, G02B 6/00, F21Y 113/00

(54) **DISPOSITIF LUMINEUX**
BELEUCHTUNGSVORRICHTUNG
LIGHTING DEVICE

(30) Priorité: 16.07.2014 FR 1401584
(43) Date de publication de la demande: 19.07.2017
(73) Titulaire: Valeo Systemes Thermiques, 78320 Le Mesnil-Saint-Denis (FR)
(72) Inventeur: THORAILLER, Maryline, F-78320 Le Mesnil Saint Denis (FR); BOMBARD, Stéphane, F-78320 Le Mesnil Saint Denis (FR)
(74) Mandataire: Delplanque, Arnaud
(86) Numéro de dépôt international: PCT/FR2015/051959
(87) Numéro de publication internationale: WO 2016/009157

(56) Documents cités:
- WO-A1-2014/074842
- DE-A1- 10 139 578
- DE-A1-102011 009 100
- DE-A1-102013 212 906
- DE-C1- 10 019 428
- FR-A1- 2 412 865
- JP-A- 2001 118 411
- US-A1- 2009 021 139
- US-A1- 2011 058 388
- US-A1- 2013 188 387

## Description

La présente invention concerne un dispositif lumineux, notamment pour véhicule automobile.

Le nombre de dispositifs lumineux présents dans l'habitacle des véhicules automobiles augmente avec la sophistication de ces derniers.

Les sources d'éclairage les plus couramment utilisées sont typiquement des diodes électroluminescentes qui sont monochromatiques avec des variétés de couleurs disponibles assez limitées. Il existe des diodes électroluminescentes polychromatiques, mais elles sont généralement très onéreuses et offrent peu de choix en termes de puissance.

Il existe des dispositifs permettant à partir d'une pluralité de sources de lumière de couleurs différentes de mélanger les faisceaux issus de ces sources pour essayer d'obtenir un faisceau ayant la couleur souhaitée. Les demandes de brevet DE102013212906 A1 et US2011058388 A1 montrent de tels dispositifs.

Certains dispositifs utilisent des lames semi réfléchissantes afin de mélanger les faisceaux issus de chaque source lumineuse. Ce type de dispositif présente une fragilité et un encombrement qui peut être incompatible avec une utilisation comme témoin lumineux dans un véhicule automobile.

Finalement, les faisceaux obtenus avec ces types de dispositifs sont généralement inhomogènes.

Ainsi, il existe un besoin pour fournir un dispositif lumineux permettant un mélange homogène d'au moins deux faisceaux lumineux dont les dimensions et la solidité seraient compatibles avec une utilisation comme témoin lumineux dans un véhicule automobile.

A cet effet, l'invention concerne un dispositif lumineux comprenant :
- au moins deux sources de lumière de couleur différente,
- un guide de lumière comprenant une face d'entrée et une face de sortie et configuré pour transmettre les rayons lumineux issus des au moins deux sources de lumière de sa face d'entrée vers sa face de sortie, dans lequel les, au moins deux, sources de lumière sont disposées les unes à côté des autres, par exemple de façon adjacente et dans lequel le guide de lumière présente une pluralité de coudes entre sa face d'entrée et sa face de sortie.

Les coudes permettent de mélanger les différents faisceaux de lumière du fait des différentes réflexions dans le guide ce qui permet d'obtenir un signal plus homogène à la sortie du guide de lumière.

Selon la présente invention, le guide de lumière comprend au moins un premier coude formant un premier angle et présentant un premier rayon de courbure par rapport à un premier axe de courbure et un deuxième coude formant un deuxième angle et présentant un deuxième rayon de courbure par rapport à un deuxième axe de courbure, le premier et le deuxième axe de courbure étant non parallèles.

Le fait que les axes de courbures ne soient pas parallèles impliquent que les coudes ne sont pas situés dans un même plan permet d'améliorer le mélange des rayons lumineux.

Selon un aspect additionnel de la présente invention, la somme des angles des coudes est comprise dans un intervalle de 330 à 390°.

L'utilisation de coudes dont la somme des angles fait environ 360° permet d'obtenir un bon mélange des faisceaux de lumière reçus en entrée et d'obtenir une face de sortie ayant la même orientation que la face d'entrée.

Selon un aspect supplémentaire de la présente invention, la face d'entrée et la face de sortie du guide de lumière se situent dans des plans sensiblement parallèles.

Cette disposition permet de faciliter l'intégration du dispositif par exemple dans un véhicule automobile.

Selon un autre aspect de la présente invention, la face d'entrée et de la face de sortie sont décalées l'une par rapport à l'autre de sorte qu'un axe perpendiculaire à l'orientation générale de la face d'entrée et passant par la face d'entrée ne peut passer par la face de sortie.

Cette disposition permet d'éviter de récupérer au niveau de la sortie du guide de lumière les rayons lumineux qui n'ont pas été transmis par le guide de lumière entre la face d'entrée et la face de sortie.

Selon un aspect supplémentaire de la présente invention, le guide de lumière comprend un premier coude formant un angle compris entre 80° et 100° selon une première orientation, un deuxième coude formant un angle compris entre 160° et 200° selon une deuxième orientation différente de la première et un troisième coude formant un angle compris entre 80° et 100° selon une troisième orientation différente de la deuxième.

Une telle répartition des angles permet un mélange efficace des rayons lumineux et les différentes orientations permettent d'éviter que des rayons lumineux réfractés au niveau d'un coude se retrouvent au niveau de la face de sortie.

Selon un aspect additionnel de la présente invention, le guide de lumière présente une forme générale de serpentin.

Selon un autre aspect de la présente invention, la longueur des portions rectilignes est inférieure à la longueur des coudes.

Une telle configuration permet de limiter l'encombrement du dispositif lumineux.

Selon un aspect supplémentaire de la présente invention, le guide de lumière comprend une paroi latérale entre sa face d'entrée et sa face de sortie, la dite paroi latérale comprenant au moins un godron orienté vers l'intérieur.

La présence de godrons permet d'accroître le nombre de réflexions subies par les faisceaux lumineux dans le guide et donc de permettre un mélange plus important des faisceaux et d'obtenir un signal plus homogène en sortie du guide de lumière.

Selon un aspect additionnel de la présente invention, le, au moins un, godron s'étend de manière sensiblement radiale.

Selon un autre aspect de la présente invention, le diamètre du guide de lumière est compris entre 2 et 4 mm et le diamètre du au moins un godron est compris entre 0,3 et 0,5 mm.

Selon un aspect supplémentaire de la présente invention, au moins une lentille est placée sur la face de sortie de manière à orienter le faisceau lumineux issu du guide de lumière.

Selon un aspect additionnel de la présente invention, les, au moins deux, sources de lumière sont regroupées dans une diode électroluminescente multi-puces.

Une telle diode permet de limiter la taille des sources de lumière ainsi que leur espacement, ce qui permet d'obtenir un dispositif plus compact.

Selon un aspect supplémentaire de la présente invention, la diode électroluminescente multi-puces comprend trois puces émettant respectivement les couleurs rouge, vert et bleue.

Une telle diode permet d'obtenir une lumière blanche en sortie du guide de lumière.

L'invention sera mieux comprise à la lumière de la description suivante qui n'est donnée qu'à titre indicatif et qui n'a pas pour but de la limiter, accompagnée des figures ci-jointes:
- la figure 1 illustre de façon schématique, une vue en trois dimensions d'un dispositif lumineux selon l'invention;
- la figure 2 illustre de façon schématique une vue de côté d'un dispositif lumineux selon l'invention, le dispositif lumineux étant représenté avec des trajets de rayons lumineux;
- la figure 3 représente de façon schématique une vue de dessus d'un guide de lumière selon l'invention ;
- la figure 4 représente de façon schématique une vue de côté du dispositif lumineux selon un mode de réalisation de la présente invention ;

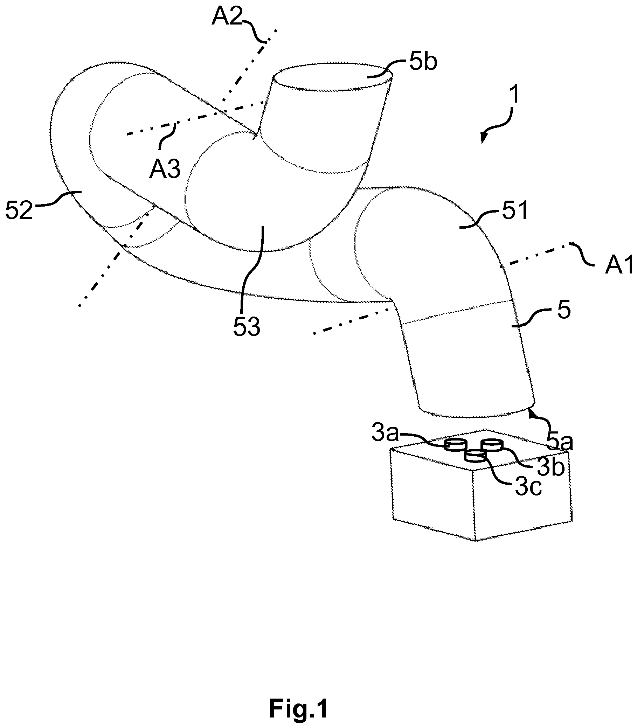

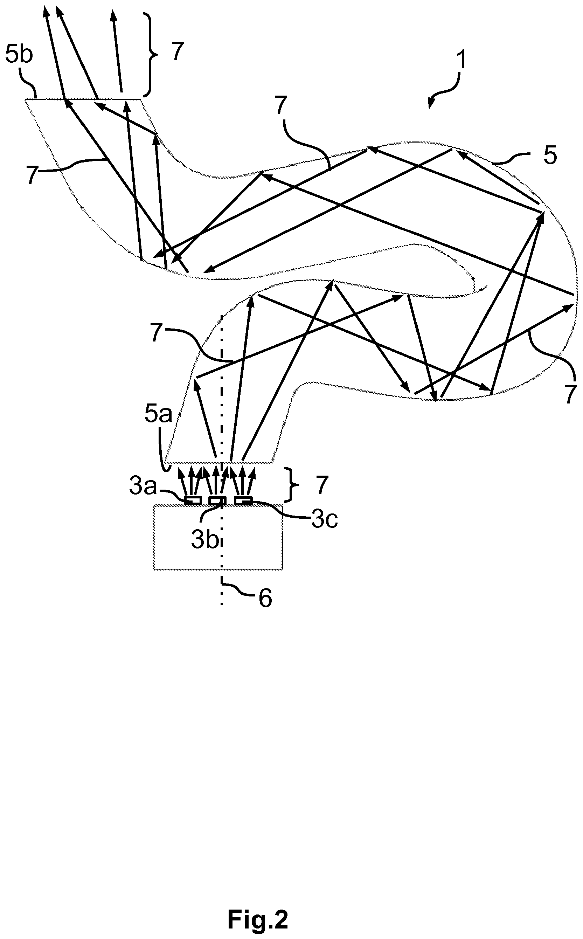

Selon un mode de réalisation représenté sur les figures 1 et 2, l'invention concerne un dispositif lumineux 1 comprenant plusieurs sources de lumière ou sources lumineuses, trois dans le cas présent, notées 3a, 3b et 3c et un guide de lumière 5 configuré pour transmettre les rayons lumineux représentés ici par des flèches 7 de sa face d'entrée 5a située en regard des trois sources lumineuses 3a, 3b et 3c à sa face de sortie 5b située à l'extrémité opposée à la face d'entrée 5a.

Le guide de lumière 5 comprend une pluralité de coudes, trois dans le cas présent, notés 51, 52 et 53 configurés pour dévier les rayons lumineux 7 issu d'une source lumineuse 3a, 3b ou 3c dans une pluralité de directions de manière à répartir les rayons lumineux 7 issus d'une source lumineuse 3a, 3b ou 3c sur l'ensemble de la face de sortie 5b.

Les sources de lumière 3a, 3b et 3c sont positionnées l'une à côté de l'autre, par exemple de manière adjacente ou proche l'une de l'autre et proche de l'axe d'entré 6 du guide de lumière 5 de manière à maximiser le nombre de rayons lumineux 7 transmis vers la face d'entrée 5a du guide de lumière 5. Les sources de lumière 3a, 3b et 3c sont également de couleurs différentes, c'est-à-dire que les longueurs d'onde des rayons lumineux qu'elles émettent sont différentes.

Selon un mode de réalisation de la présente invention, ces longueurs d'onde sont distinctes et correspondent à un intervalle prédéfini du spectre visible comme par exemple l'intervalle 380 à 450 nm pour la couleur violette ou l'intervalle 620 à 670 nm pour la couleur rouge.

Par ailleurs, la présente invention ne se limite pas à trois sources de lumière 3a, 3b et 3c mais s'étend également à des modes de réalisation comprenant deux sources de lumière ou à un plus grand nombre de sources de lumière, le nombre de sources de lumière étant de préférence limité par la taille de la face d'entrée 5a du guide de lumière 5 et la taille des sources de lumière 3a, 3b et 3c pour que les rayons lumineux 7 issus des sources de lumière 3a, 3b et 3c soient transmis par le guide de lumière 5. Avantageusement les sources lumineuses sont disposées de manière centrée par rapport à la face d'entrée 5a.

Les sources de lumière 3a, 3b et 3c sont par exemple des diodes électroluminescentes et peuvent être positionnées sur un substrat commun. De plus, selon un mode de réalisation de la présente invention, pour réduire leurs tailles, les sources de lumière 3a, 3b et 3c sont regroupées dans une diode électroluminescente multi-puces émettant des rayons lumineux de différentes couleurs, par exemple rouge, vert et bleu. En effet, dans le cas où l'on veut récupérer une lumière blanche en sortie du guide de lumière 5, l'utilisation de trois sources de lumière 3a, 3b et 3c de couleur rouge, verte et bleue permet d'obtenir une lumière relativement blanche lorsque l'on mixe les trois rayonnements correspondants.

Le guide de lumière 5 est réalisé en matériau transparent, par exemple en matériau plastique clair sans diffusion comme par exemple du polycarbonate cristal ou avec une légère diffusion comme par exemple du polycarbonate légèrement laiteux. Le guide de lumière 5 comprend une pluralité de coudes ayant des orientations différentes. Ainsi, sur la figure 1, le premier coude 51 forme un premier angle d'environ 90° , par exemple entre 80 et 100° avec un rayon de courbure légèrement supérieur au diamètre du guide de lumière 5 par rapport à un premier axe de courbure noté A1, le deuxième coude 52 forme un angle d'environ 180°, par exemple entre 160 et 200° et présentant un deuxième rayon de courbure également légèrement supérieur au diamètre du guide de lumière 5 par rapport à un deuxième axe de courbure noté A2, le premier A1 et le deuxième A2 axes de courbure étant non parallèles. L'utilisation d'un guide de lumière 5 coudée dont certains au moins des axes de courbure A1, A2 des coudes 51, 52 ne sont pas parallèles permet d'augmenter le mélange dimensionnel des rayons lumineux 7 issus des différentes sources de lumière 3a, 3b et 3c de manière à répartir les rayons lumineux 7 vers l'ensemble de la face de sortie 5b.

Le guide de lumière 5 de la figure 1 comprend également un troisième coude 53 d'environ 90°, par exemple entre 80 et 100% avec un rayon de courbure légèrement supérieur au diamètre du guide de lumière 5 par rapport à un troisième axe de courbure noté A3 qui est sensiblement parallèle au premier axe de courbure A1. Le guide de lumière 5 a ainsi une forme générale de serpentin dans lequel les portions rectilignes ici sont réduites. En effet, les portions rectilignes ont ici une longueur plus faible que les coudes 51, 52, 53 de manière à réduire au maximum l'encombrement du guide de lumière tout en procurant un bon mélange des rayons lumineux 7.

D'autre part, les faces d'entrée 5a et de sortie 5b sont situées dans des plans sensiblement parallèles. En effet, l'utilisation de coudes 51, 52, 53 dont la somme est sensiblement égale à 360°, par exemple comprise entre 330 et 390° permet d'obtenir une face d'entrée 5a et une face de sortie 5b ayant une orientation similaire tout en limitant la longueur du guide du lumière 5, la longueur étant néanmoins suffisante pour permettre un bon mélange des rayons lumineux 7 du fait de l'orientation et du rayon de courbure des coudes 51, 52 et 53.

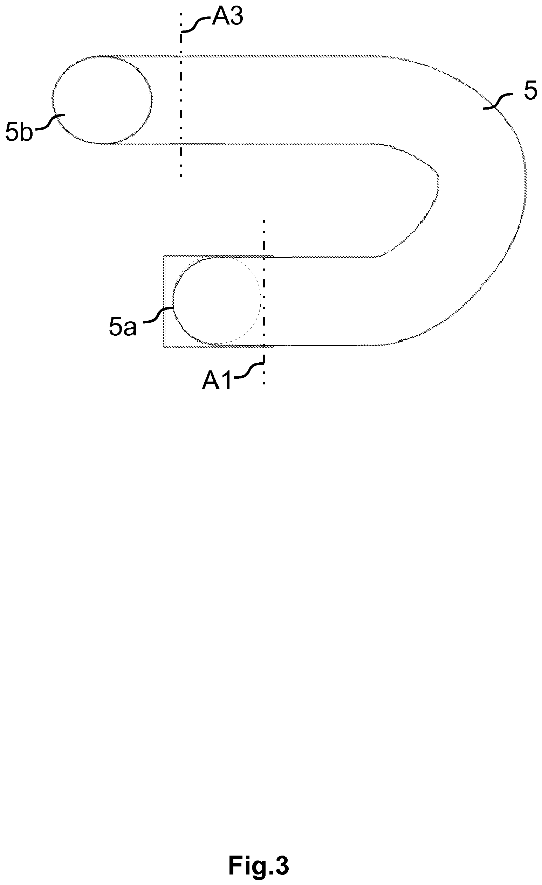

Par ailleurs, comme on peut le voir sur la figure 3, les faces d'entrée 5a et de sortie 5b sont décalées l'une par rapport à l'autre. Ainsi, un axe perpendiculaire à l'orientation générale de la face d'entrée 5a et passant par la face d'entrée 5a ne peut passer par la face de sortie 5b. Ce décalage permet d'éviter que des rayons lumineux 7 issus d'une des sources de lumière 3a, 3b ou 3c atteignent la face de sortie 5b sans avoir suivi le trajet du guide de lumière 5. De plus, l'orientation des coudes 51, 52 et 53 permet d'éviter que des rayons lumineux réfractés au niveau de l'un des coudes 51, 52 ou 53 ne soient transmis vers la face de sortie 5b.

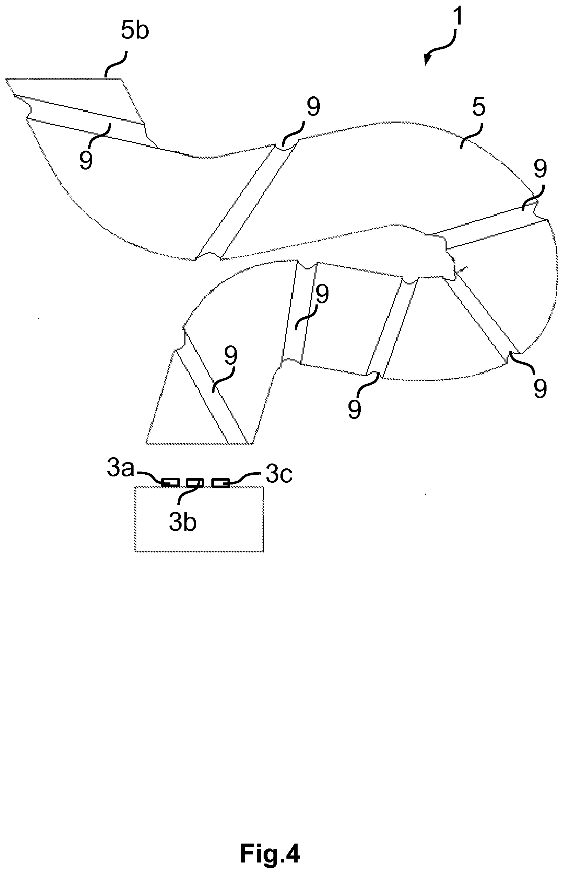

Selon un mode de réalisation représenté sur la figure 4, le guide de lumière comprend également au moins un godron 9, sept dans le cas présent, orienté vers l'intérieur, c'est-à-dire formant un creux sur la paroi latérale extérieure du guide de lumière 5 située entre la face d'entrée 5a et la face de sortie 5b. L'axe des godrons 9 s'étend de manière sensiblement radiale par rapport à l'axe du guide de lumière. Les godrons peuvent être positionnés aussi bien au niveau des coudes que des portions rectilignes du guide de lumière. De préférence, les godrons 9 s'étendent sur tout le pourtour du guide de lumière 5. Ces godrons 9 permettent d'accroître encore le nombre de réflexions subies par les rayons lumineux 7 à l'intérieur du guide de lumière 5 et ainsi d'améliorer encore la répartition des rayons lumineux 7 au niveau de la face de sortie. La hauteur des godrons 9 est au moins égale à 10% du diamètre du guide de lumière. Le diamètre du guide de lumière 5 est par exemple compris entre 2 et 4 mm et le diamètre des godrons 9 est par exemple compris entre 0,3 et 0,5 mm.

Une ou plusieurs lentilles peuvent également être placées au niveau de la face de sortie 5b du guide de lumière 5 pour orienter le faisceau lumineux, par exemple pour le focaliser dans une direction précise ou au contraire pour le diffuser sur une zone élargie. Ces lentilles sont par exemple des lentilles de Fresnel.

Les coudes 51, 52, 53 du guide de lumière éventuellement couplés aux godrons 9 permettent ainsi de réfléchir des rayons lumineux 7 issus d'une même source de lumière 5 dans des directions différentes et donc de répartir ces rayons lumineux 7 sur l'ensemble de la face de sortie 5b de manière relativement homogène. Ainsi, l'utilisation de plusieurs sources de lumière 3a, 3b et 3c permet d'obtenir une superposition des rayons lumineux 7 issus des différentes sources de lumière 3a, 3b et 3c sur l'ensemble de la face de sortie 5b. Ces sources de lumière 3a, 3b et 3c ayant des couleurs différentes, le faisceau de lumière obtenu à la sortie du guide de lumière 5 correspond à un faisceau relativement homogène dont la couleur correspond à la superposition des couleurs des sources de lumière 3a, 3b et 3c. Ainsi, en sélectionnant les couleurs des sources de lumière 3a, 3b et 3c, on peut obtenir un faisceau lumineux de la teinte désirée. L'utilisation de trois sources de lumière rouge, verte et bleue par exemple permet d'obtenir un faisceau de lumière blanche relativement homogène. Ce faisceau peut alors être utilisé pour éclairer un élément particulier. Par exemple, dans le cas d'un véhicule automobile, le dispositif lumineux 1 décrit précédemment peut être installé dans un dôme module situé au-dessus de la console centrale pour éclairer la console centrale ou un élément particulier de la console centrale.

## Revendications

1. Dispositif lumineux (1) comprenant :
- au moins deux sources de lumière (3a, 3b, 3c) de couleur différente,
- un guide de lumière (5) comprenant une face d'entrée (5a) et une face de sortie (5b) et configuré pour transmettre les rayons lumineux (7) issus des au moins deux sources de lumière (3a, 3b, 3c) de sa face d'entrée (5a) vers sa face de sortie (5b), les, au moins deux, sources de lumière (3a, 3b, 3c) étant disposées les unes à côté des autres, le dispositif lumineux étant **caractérisé en ce que** le guide de lumière (5) présente une pluralité de coudes (51, 52, 53) entre sa face d'entrée (5a) et sa face de sortie (5b) et dans lequel le guide de lumière (5) comprend au moins un premier coude (51) formant un premier angle et présentant un premier rayon de courbure par rapport à un premier axe de courbure (A1) et un deuxième coude (52) formant un deuxième angle et présentant un deuxième rayon de courbure par rapport à un deuxième axe de courbure (A2), le premier (A1) et le deuxième (A2) axes de courbure étant non parallèles.

2. Dispositif lumineux (1) selon la revendication 1 dans lequel la somme des angles des coudes (51, 52, 53) est comprise dans un intervalle allant de 330° à 390°.

3. Dispositif lumineux (1) selon l'une des revendications précédentes dans lequel la face d'entrée (5a) et la face de sortie (5b) du guide de lumière (5) se situent dans des plans sensiblement parallèles.

4. Dispositif lumineux (1) selon la revendication 3, dans lequel la face d'entrée (5a) et de la face de sortie (5b) sont décalées l'une par rapport à l'autre de sorte qu'un axe perpendiculaire à l'orientation générale de la face d'entrée (5a) et passant par la face d'entrée (5a) ne peut passer par la face de sortie(5b).

5. Dispositif lumineux (1) selon l'une des revendications précédentes dans lequel le guide de lumière (5) comprend un premier coude (51) formant un angle compris entre 80° et 100° selon une première orientation, un deuxième coude (52) formant un angle compris entre 160° et 200° selon une deuxième orientation différente de la première et un troisième coude (53) formant un angle compris entre 80° et 100° selon une troisième orientation différente de la deuxième.

6. Dispositif lumineux (1) selon l'une des revendications précédentes dans lequel le guide de lumière (5) présente une forme générale de serpentin.

7. Dispositif lumineux (1) selon l'une des revendications précédentes dans lequel le guide de lumière présente des portions rectilignes et dans lequel la longueur des portions rectilignes est inférieure à la longueur des coudes (51, 52, 53).

8. Dispositif lumineux (1) selon l'une des revendications précédentes dans lequel le guide de lumière (5) comprend une paroi latérale entre sa face d'entrée (5a) et sa face de sortie (5b), ladite paroi latérale comprenant au moins un godron (9) orienté vers l'intérieur.

9. Dispositif lumineux (1) selon la revendication 8, dans lequel le, au moins un, godron(9) s'étend de manière sensiblement radiale.

10. Dispositif lumineux (1) selon la revendication 9, dans lequel le diamètre du guide de lumière (5) est compris entre 2 et 4 mm et le diamètre du au moins un godron (9) est compris entre 0,3 et 0,5 mm.

11. Dispositif lumineux (1) selon l'une des revendications précédentes dans lequel au moins une lentille est placée sur la face de sortie (5b) de manière à orienter le faisceau lumineux issu du guide de lumière (5).

12. Dispositif lumineux (1) selon l'une des revendications précédentes, dans lequel les, au moins deux, sources de lumière (3a, 3b, 3c) sont regroupées dans une diode électroluminescente multi-puces.

13. Dispositif lumineux (1) selon la revendication 11 dans lequel la diode électroluminescente multi-puces comprend trois puces émettant respectivement les couleurs rouge, vert et bleue.

## Patentansprüche

1. Beleuchtungsvorrichtung (1), welche umfasst:
- wenigstens zwei Lichtquellen (3a, 3b, 3c) von unterschiedlicher Farbe;
- einen Lichtleiter (5), der eine Eintrittsfläche (5a) und eine Austrittsfläche (5b) umfasst und dafür ausgelegt ist, die Lichtstrahlen (7), die von den wenigstens zwei Lichtquellen (3a, 3b, 3c) ausgehen, von seiner Eintrittsfläche (5a) zu seiner Austrittsfläche (5b) zu übertragen,
wobei die wenigstens zwei Lichtquellen (3a, 3b, 3c) nebeneinander angeordnet sind,
wobei die Beleuchtungsvorrichtung **dadurch gekennzeichnet ist, dass** der Lichtleiter (5) zwischen seiner Eintrittsfläche (5a) und seiner Austrittsfläche (5b) mehrere Winkelstücke (51, 52, 53) aufweist, und wobei der Lichtleiter (5) wenigstens ein erstes Winkelstück (51), das einen ersten Winkel bildet und einen ersten Krümmungsradius in Bezug auf eine erste Krümmungsachse (A1) aufweist, und ein zweites Winkelstück (52), das einen zweiten Winkel bildet und einen zweiten Krümmungsradius in Bezug auf eine zweite Krümmungsachse (A2) aufweist, umfasst, wobei die erste (A1) und die zweite (A2) Krümmungsachse nicht parallel sind.

2. Beleuchtungsvorrichtung (1) nach Anspruch 1, wobei die Summe der Winkel der Winkelstücke (51, 52, 53) in einem Intervall von 330° bis 390° liegt.

3. Beleuchtungsvorrichtung (1) nach einem der vorhergehenden Ansprüche, wobei sich die Eintrittsfläche (5a) und die Austrittsfläche (5b) des Lichtleiters (5) in Ebenen befinden, die im Wesentlichen parallel sind.

4. Beleuchtungsvorrichtung (1) nach Anspruch 3, wobei die Eintrittsfläche (5a) und die Austrittsfläche (5b) so zueinander versetzt sind, dass eine Achse, die zur allgemeinen Ausrichtung der Eintrittsfläche (5a) senkrecht ist und durch die Eintrittsfläche (5a) verläuft, nicht durch die Austrittsfläche (5b) verlaufen kann.

5. Beleuchtungsvorrichtung (1) nach einem der vorhergehenden Ansprüche, wobei der Lichtleiter (5) ein erstes Winkelstück (51), das einen Winkel zwischen 80° und 100° in einer ersten Ausrichtung bildet, ein zweites Winkelstück (52), das einen Winkel zwischen 160° und 200° in einer zweiten Ausrichtung bildet, die von der ersten verschieden ist, und ein drittes Winkelstück (53), das einen Winkel zwischen 80° und 100° in einer dritten Ausrichtung bildet, die von der zweiten verschieden ist, umfasst.

6. Beleuchtungsvorrichtung (1) nach einem der vorhergehenden Ansprüche, wobei der Lichtleiter (5) im Wesentlichen eine Serpentinenform aufweist.

7. Beleuchtungsvorrichtung (1) nach einem der vorhergehenden Ansprüche, wobei der Lichtleiter geradlinige Abschnitte aufweist und wobei die Länge der geradlinigen Abschnitte kleiner als die Länge der Winkelstücke (51, 52, 53) ist.

8. Beleuchtungsvorrichtung (1) nach einem der vorhergehenden Ansprüche, wobei der Lichtleiter (5) zwischen seiner Eintrittsfläche (5a) und seiner Austrittsfläche (5b) eine Seitenwand umfasst, wobei die Seitenwand wenigstens eine nach innen gerichtete Faltung (9) umfasst.

9. Beleuchtungsvorrichtung (1) nach Anspruch 8, wobei sich die wenigstens eine Faltung (9) im Wesentlichen radial erstreckt.

10. Beleuchtungsvorrichtung (1) nach Anspruch 9, wobei der Durchmesser des Lichtleiters (5) zwischen 2 und 4 mm liegt und der Durchmesser der wenigstens einen Faltung (9) zwischen 0,3 und 0,5 mm liegt.

11. Beleuchtungsvorrichtung (1) nach einem der vorhergehenden Ansprüche, wobei wenigstens eine Linse auf der Austrittsfläche (5b) angeordnet ist, um das aus dem Lichtleiter (5) austretende Lichtbündel auszurichten.

12. Beleuchtungsvorrichtung (1) nach einem der vorhergehenden Ansprüche, wobei die wenigstens zwei Lichtquellen (3a, 3b, 3c) in einer Multichip-Leuchtdiode vereinigt sind.

13. Beleuchtungsvorrichtung (1) nach Anspruch 11, wobei die Multichip-Leuchtdiode drei Chips umfasst, welche die Farben Rot, Grün bzw. Blau emittieren.

## Claims

1. Luminous device (1) comprising:
- at least two light sources (3a, 3b, 3c) of different colour,
- a light guide (5) comprising an entrance face (5a) and an exit face (5b) and configured to transmit the light rays (7) generated by at least two light sources (3a, 3b, 3c) from its entrance face (5a) to its exit face (5b),
the, at least two, light sources (3a, 3b, 3c) being placed beside one another,
the luminous device being **characterized in that** the light guide (5) has a plurality of dog-legs (51, 52, 53) between its entrance face (5a) and its exit face (5b) and wherein the light guide (5) comprises at least a first dog-leg (51) making a first angle and having a first radius of curvature with respect to a first axis of curvature (A1) and a second dog-leg (52) making a second angle and having a second radius of curvature with respect to a second axis of curvature (A2), the first and second axes of curvature (Al, A2) being non-parallel.

2. Luminous device (1) according to Claim 1, wherein the sum of the angles of the dog-legs (51, 52, 53) is comprised in an interval ranging from 330° to 390°.

3. Luminous device (1) according to one of the preceding claims, wherein the entrance face (5a) and the exit face (5b) of the light guide (5) are located in substantially parallel planes.

4. Luminous device (1) according to Claim 3, wherein the entrance face (5a) and the exit face (5b) are offset with respect to each other so that an axis perpendicular to the general orientation of the entrance face (5a) and passing through the entrance face (5a) cannot pass through the exit face (5b).

5. Luminous device (1) according to one of the preceding claims, wherein the light guide (5) comprises a first dog-leg (51) making an angle comprised between 80° and 100° with a first orientation, a second dog-leg (52) making an angle comprised between 160° and 200° with a second orientation different from the first and a third dog-leg (53) making an angle comprised between 80° and 100° with a third orientation different from the second.

6. Luminous device (1) according to one of the preceding claims, wherein the light guide (5) has a serpentine general shape.

7. Luminous device (1) according to one of the preceding claims, wherein the light guide comprises rectilinear segments and wherein the length of the rectilinear segments is smaller than the length of the dog-legs (51, 52, 53).

8. Luminous device (1) according to one of the preceding claims, wherein the light guide (5) comprises a side wall between its entrance face (5a) and its exit face (5b), said side wall comprising at least one gadroon (9) oriented toward the interior.

9. Luminous device (1) according to Claim 8, wherein the, at least one, gadroon (9) extends substantially radially.

10. Luminous device (1) according to Claim 9, wherein the diameter of the light guide (5) is comprised between 2 and 4 mm and the diameter of the at least one gadroon (9) is comprised between 0.3 and 0.5 mm.

11. Luminous device (11) according to one of the preceding claims, wherein at least one lens is placed on the exit face (5b) so as to orient the light beam output from the light guide (5).

12. Luminous device (11) according to one of the preceding claims, wherein the, at least two, light sources (3a, 3b, 3c) are grouped together in a multi-chip light-emitting diode.

13. Luminous device (1) according to Claim 11, wherein the multi-chip light-emitting diode comprises three chips that emit the colours red, green and blue, respectively.
